(19) Europäisches Patentamt
European Patent Office
Office européen des brevets

(11) **EP 3 747 239 B1**

(12) **EUROPÄISCHE PATENTSCHRIFT**

(45) Veröffentlichungstag und Bekanntmachung des Hinweises auf die Patenterteilung:
**04.05.2022  Patentblatt 2022/18**

(21) Anmeldenummer: **19707366.1**

(22) Anmeldetag: **25.02.2019**

(51) Internationale Patentklassifikation (IPC):
**H05B 45/382** *(2020.01)*     **H05B 45/385** *(2020.01)*

(52) Gemeinsame Patentklassifikation (CPC):
**H05B 45/382; H05B 45/385;** Y02B 20/30

(86) Internationale Anmeldenummer:
**PCT/EP2019/054568**

(87) Internationale Veröffentlichungsnummer:
**WO 2019/170458 (12.09.2019 Gazette 2019/37)**

(54) **SYNCHRONKONVERTER MIT FREQUENZSTABILER REGELUNG**

SYNCHRONOUS CONVERTER HAVING FREQUENCY-STABLE CONTROL

CONVERTISSEUR SYNCHRONE À RÉGLAGE DE FRÉQUENCE STABLE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.03.2018  DE 102018203281**

(43) Veröffentlichungstag der Anmeldung:
**09.12.2020  Patentblatt 2020/50**

(73) Patentinhaber: **Tridonic GmbH & Co. KG**
**6851 Dornbirn (AT)**

(72) Erfinder: **DE CLERCQ, Ludwig Erasmus**
**6850 Dornbirn (AT)**

(74) Vertreter: **Rupp, Christian**
**Mitscherlich PartmbB**
**Patent- und Rechtsanwälte**
**Sonnenstraße 33**
**80331 München (DE)**

(56) Entgegenhaltungen:
**DE-A1-102015 114 036     US-A1- 2015 200 599**
**US-B1- 9 078 317**

**Beschreibung**

GEBIET DER ERFINDUNG

Die vorliegende Erfindung betrifft Synchronkonverter und Verfahren zum Betreiben zumindest einer LED, sowie diesbezügliche Betriebsgeräte und Beleuchtungseinrichtungen. Insbesondere betrifft die vorliegende Erfindung Synchronkonverter mit im allgemeinen Fall frequenzabhängiger Impulsantwort.

HINTERGRUND DER ERFINDUNG

Betriebsgeräte zum Betreiben von LED-Modulen bedienen sich bekannter Konverterarchitekturen, um eine für die zu betreibenden LED-Module angepasste Lastspannung aus einer vorgegebenen Eingangsspannung, beispielsweise einer Bus-Gleichspannung oder einer Netz-Wechselspannung, bereitzustellen, welche sich nicht direkt zum Betreiben von LED-Modulen eignet.

Synchronkonverter bewerkstelligen dies mittels zweier Schaltmittel, etwa Transistoren, welche einen Leistungsfluss durch einen Energiespeicher, etwa einen magnetischen Energiespeicher, steuern.

Eine Ansteuerfrequenz der beiden Schaltmittel verändert sich normalerweise mit einem Strombedarf der zu betreibenden LED-Module, insbesondere also auch in einem Dimmbetrieb der zu betreibenden LED-Module, in einer Größenordnung von 100 kHz.

Indes weisen bekannte Synchronkonverter aufgrund lastseitig vorgesehener Induktivitäten, Kapazitäten und LEDs frequenzabhängige Impulsantworten mit entsprechenden frequenzabhängigen Verlusten und in deren Folge ungenauer Regelung auf.

Die US 2015/200599 A1 offenbart einen dem Stand der Technik zuzurechnenden beispielhaften Synchronkonverter zum Betreiben zumindest einer LED.

ZUSAMMENFASSUNG DER ERFINDUNG

Es besteht daher ein Bedarf an Synchronkonvertern, darauf aufbauenden Vorrichtungen sowie zugehörigen Verfahren, welche einige oder mehrere dieser nachteiligen Aspekte vermeiden.

Diese Aufgabe wird erfindungsgemäß durch einen Synchronkonverter zum Betreiben zumindest einer LED gemäß Patentanspruch 1, ein Betriebsgerät gemäß Patentanspruch 11, eine Beleuchtungseinrichtung gemäß Patentanspruch 12 und durch ein zum Betreiben zumindest einer LED gemäß Patentanspruch 13 gelöst. Die abhängigen Ansprüche definieren bevorzugte und vorteilhafte Ausführungsformen der Erfindung.

Erfindungsgemäß umfasst ein Synchronkonverter zum Betreiben zum indest einer LED: eine Versorgungsseite und eine Lastseite mit jeweiligen Schaltmitteln; Erfassungsmittel zum Erfassen einer LED-Spannung; und eine Steuereinrichtung zum Ansteuern der Schaltmittel in einem Gegentakt, welcher von der erfassten LED-Spannung abhängt. Dabei ist die Steuereinrichtung dazu eingerichtet, das Schaltmittel auf der Versorgungsseite mit einer jeweiligen konstanten Einschaltzeit für einen jeweiligen aus einer Mehrzahl von vorgegebenen Wertebereichen für die erfasste LED-Spannung anzusteuern, in den die erfasste LED-Spannung fällt.

Vorteilhaft steuern derartige Synchronkonverter lediglich einen vergleichsweise schmalen und schwach frequenzabhängigen Abschnitt der frequenzabhängigen Impulsantwort aus, sodass frequenzabhängige Verluste verringert werden und eine genauere Regelung ermöglicht wird. Beispielsweise ist es so möglich, eine Frequenzvariation von einer Größenordnung von 100 kHz auf eine Größenordnung von 10 kHz einzuschränken. Ganz allgemein wird dabei eine Betriebsrobustheit des Synchronkonverters und darauf aufbauender Vorrichtungen erhöht, etwa gegenüber Temperatur- und sonstigen zeitabhängigen Einflüssen.

Unter einem Synchronkonverter im Sinne dieser Anmeldung kann eine elektronische Schaltung und/oder Baugruppe verstanden werden, welche dazu eingerichtet ist, eine elektrische Leistung mittels eines Energiespeichers und zweier Schaltmittel umzuspannen, welche alternativ angesteuert einen Leistungsfluss durch den Energiespeicher steuern.

Unter einer Versorgungsseite im Sinne dieser Anmeldung kann ein Schaltungsabschnitt des Synchronkonverters verstanden werden, welcher elektrisch leitend an eine elektrische Energiequelle, insbesondere an eine Spannungsquelle, anschließbar ist und dazu eingerichtet ist, den Energiespeicher, insbesondere magnetischen Energiespeicher, aus der elektrischen Energiequelle zu speisen.

Unter einer Lastseite im Sinne dieser Anmeldung kann ein Schaltungsabschnitt des Synchronkonverters verstanden werden, welcher elektrisch leitend an eine Last, insbesondere an die zumindest eine LED, anschließbar ist und dazu eingerichtet ist, diese Last aus dem Energiespeicher zu speisen.

Unter einem Schaltmittel im Sinne dieser Anmeldung kann ein elektronisch betätigbarer Schalter, insbesondere ein Transistor, verstanden werden.

Unter einer Steuereinrichtung im Sinne dieser Anmeldung kann eine elektronische Schaltung und/oder Baugruppe verstanden werden, welche einer planvollen und zielgerichteten Beeinflussung des Verhaltens des Synchronkonverters dient und dazu insbesondere eine integrierte Schaltung umfasst, welche dazu eingerichtet ist, Ansteuersignale für aktive Betriebsmittel, insbesondere Schaltmittel, des Synchronkonverters in Abhängigkeit von Eingangsgrößen und von einer Programmierung oder Verdrahtung der integrierten Schaltung bereitstellen. Beispiele für solche integrierte Schaltungen umfassen Mikrocontroller oder anwendungsspezifische integrierte Schaltungen, ASICs.

Vorteilhaft für eine Kostenstruktur ist bei Kleinserienfertigung ein Mikrocontroller, und bei Großserienfertigung ein ASIC.

Unter einem Gegentakt im Sinne dieser Anmeldung kann verstanden werden, dass die zugrundeliegenden Ansteuersignale stets zueinander komplementäre Logikpegel aufweisen. Beispielsweise erfordert ein "1"-Pegel eines Ansteuersignals einen "0"-Pegel eines anderen Ansteuersignals, und umgekehrt.

Unter einer Einschaltzeit im Sinne dieser Anmeldung kann eine Zeitspanne während eines periodischen Betriebszyklus des Synchronkonverters 10 verstanden werden, in welchem ein betrachtetes Schaltmittel geschlossen, d.h. elektrisch leitfähig ist und einen Stromfluss ermöglicht.

Die Steuereinrichtung kann dazu eingerichtet sein, die jeweilige konstante Einschaltzeit für den jeweiligen aus der Mehrzahl von vorgegebenen Wertebereichen für die erfasste LED-Spannung aus einer vorgegebenen Abruftabelle abzurufen.

Vorteilhaft erlauben derartige Abruftabellen einen effizienten Wirkbetrieb der Steuereinrichtung mit einer minimalen Anzahl von wiederkehrenden Berechnungen.

Unter einer Abruftabelle im Sinne dieser Anmeldung kann eine Tabelle mit vorgegebenen Werten verstanden werden, aus welcher ein jeweiliges Abrufergebnis in Abhängigkeit eines oder mehrerer Vorgabewerte, insbesondere Indizes, abrufbar ist.

Alternativ kann die Steuereinrichtung dazu eingerichtet sein, die jeweilige konstante Einschaltzeit für den jeweiligen aus der Mehrzahl von vorgegebenen Wertebereichen für die erfasste LED-Spannung im Wirkbetrieb zu berechnen.

Vorteilhaft erlaubt eine Berechnung der jeweiligen konstanten Einschaltzeit im Wirkbetrieb eine flexible Umkonfiguration des Schaltmittels aufgrund veränderlicher Beschaltung und/oder Speisung.

Die Steuereinrichtung kann dazu eingerichtet sein, die jeweilige konstante Einschaltzeit für den jeweiligen aus der Mehrzahl von vorgegebenen Wertebereichen für die erfasste LED-Spannung in Abhängigkeit von einer maximalen Stromstärke auf der Lastseite zu begrenzen.

Vorteilhaft lässt sich durch eine Begrenzung der konstanten Einschaltzeit des Schaltmittels auf der Versorgungsseite des Synchronkonverters eine gewünschte Dimmstufe einstellen: Eine bestimmte Einschaltzeit auf der Versorgungsseite führt zu bestimmten maximalen Stromstärken auf der Versorgungsseite wie auch auf der Lastseite, und letztere beeinflusst eine mittlere LED-Stromstärke.

Die Steuereinrichtung kann dazu eingerichtet sein, das Schaltmittel auf der Lastseite mit einer variablen Einschaltzeit in Abhängigkeit von der erfassten LED-Spannung anzusteuern.

Vorteilhaft erfolgt in derartigen Synchronkonvertern eine langsame Regelung einer Periodendauer $T = T_p + T_s$ einer Ansteuerfrequenz mit einer eingebetteten schnellen Regelung der konstanten Einschaltzeit $T_p = \alpha T$ des Schaltmittels auf der Versorgungsseite.

Vorteilhaft ist es ferner möglich, die variable Einschaltzeit $T_s$ für eine reduzierte elektromagnetische Störung mittels einer Pseudozufallsfolge weiter zu variieren (sogenanntes Dithering).

Die Erfassungsmittel können eine Hilfswicklung einer Induktivität des Synchronkonverters zum Bereitstellen einer Stromstärke umfassen, welche zu einer Stromstärke durch das Schaltmittel auf der Versorgungsseite des Synchronkonverters proportional ist.

Vorteilhaft erlaubt dies eine nichtinvasive Erfassung der Stromstärke durch das Schaltmittel auf der Versorgungsseite.

Unter einer Induktivität im Sinne dieser Anmeldung kann ein passives zweipoliges Schaltungselement verstanden werden, welches dazu eingerichtet ist, elektrische Energie reversibel in Form eines Magnetfeldes zu speichern und daraus abzurufen. Beispielsweise ist eine Induktivität mittels einer Spule mit einer Anzahl N von Wicklungswindungen realisierbar.

Die Erfassungsmittel können ferner ein Tiefpassfilter zum Filtern der bereitgestellten proportionalen Stromstärke umfassen.

Die Erfassungsmittel können ein RC-Glied als das Tiefpassfilter umfassen.

Vorteilhaft lässt sich dadurch mit geringem Schaltungsaufwand am Ausgang des Tiefpassfilters eine zu der LED-Spannung proportionale Spannung abgreifen.

Der Synchronkonverter kann als ein synchroner Sperrwandler ausgebildet sein.

Vorteilhaft kombiniert eine solche Konverterarchitektur die vorteilhaften Eigenschaften von äußerst effizienten Synchronkonvertern und von sicheren isolierenden Konvertern.

Alternativ kann der Synchronkonverter als ein synchroner Abwärtswandler ausgebildet sein.

Vorteilhaft kann diese Konverterarchitektur bei geringer Schaltungskomplexität einen hohen Wirkungsgrad aufweisen.

Gemäß einem zweiten Aspekt umfasst ein Betriebsgerät zum Betreiben zumindest einer LED einen Synchronkonverter gemäß Ausführungsbeispielen.

Vorteilhaft sind die oben genannten Vorrichtungsmerkmale des Synchronkonverters mit ihren jeweiligen Vorteilen in dem Betriebsgerät analog nutzbar.

Unter einem Betriebsgerät im Sinne dieser Anmeldung kann eine elektronische Schaltung und/oder Baugruppe verstanden werden, welche dazu eingerichtet ist, die zumindest eine LED aus einer elektrischen Energiequelle zu speisen, welche per se nicht dazu eingerichtet ist.

Gemäß einem dritten Aspekt umfasst eine Beleuchtungseinrichtung ein Betriebsgerät gemäß Ausführungsbeispielen; und zumindest eine LED.

Vorteilhaft sind die oben genannten Vorrichtungsmerkmale des Synchronkonverters bzw. des Betriebsgeräts mit ihren jeweiligen Vorteilen in der Beleuchtungseinrichtung analog nutzbar.

Erfindungsgemäß umfasst ein Verfahren zum Betreiben zumindest einer LED mit einem Synchronkonverter, welcher eine Versorgungsseite und eine Lastseite mit jeweiligen Schaltmitteln aufweist: ein Erfassen einer LED-Spannung; und ein Ansteuern der

Schaltmittel in einem Gegentakt, welcher von der erfassten LED-Spannung abhängt. Dabei wird das Schaltmittel auf der Versorgungsseite mit einer jeweiligen konstanten Einschaltzeit für einen jeweiligen aus einer Mehrzahl von vorgegebenen Wertebereichen für die erfasste LED-Spannung angesteuert wird, in den die erfasste LED-Spannung fällt.

Das Verfahren kann mit einem Synchronkonverter gemäß Ausführungsbeispielen durchgeführt werden.

Vorteilhaft sind die oben genannten Vorrichtungsmerkmale des Synchronkonverters mit ihren jeweiligen Vorteilen in dem Verfahren analog nutzbar.

KURZE BESCHREIBUNG DER FIGUREN

Die Erfindung wird nachfolgend anhand bevorzugter Ausführungsformen und unter Bezugnahme auf die Zeichnungen kurz erläutert, wobei gleiche Bezugszeichen gleiche oder ähnliche Elemente bezeichnen.

Fig. 1 zeigt schematisch einen Synchronkonverter zum Betreiben zumindest einer LED nach einem Ausführungsbeispiel.

Fig. 2 zeigt schematisch einen zeitlichen Verlauf ausgewählter elektrischer Größen des Synchronkonverters nach dem Ausführungsbeispiel.

Fig. 3 zeigt schematisch ein Betriebsgerät zum Betreiben zumindest einer LED mit dem Synchronkonverter nach dem Ausführungsbeispiel und eine Beleuchtungseinrichtung mit dem Betriebsgerät.

Fig. 4 zeigt schematisch ein Verfahren zum Betreiben zumindest einer LED nach einem Ausführungsbeispiel.

DETAILLIERTE BESCHREIBUNG VON AUSFÜHRUNGSBEISPIELEN

Die Erfindung wird nachfolgend anhand bevorzugter Ausführungsformen und unter Bezugnahme auf die Zeichnungen näher erläutert. Eine Beschreibung von Ausführungsbeispielen in spezifischen Anwendungsfeldern bedeutet keine Einschränkung auf diese Anwendungsfelder. Elemente schematischer Darstellungen sind nicht notwendigerweise maßstabsgetreu wiedergegeben, sondern vielmehr derart, dass ihre Funktion und ihr Zweck dem Fachmann verständlich werden.

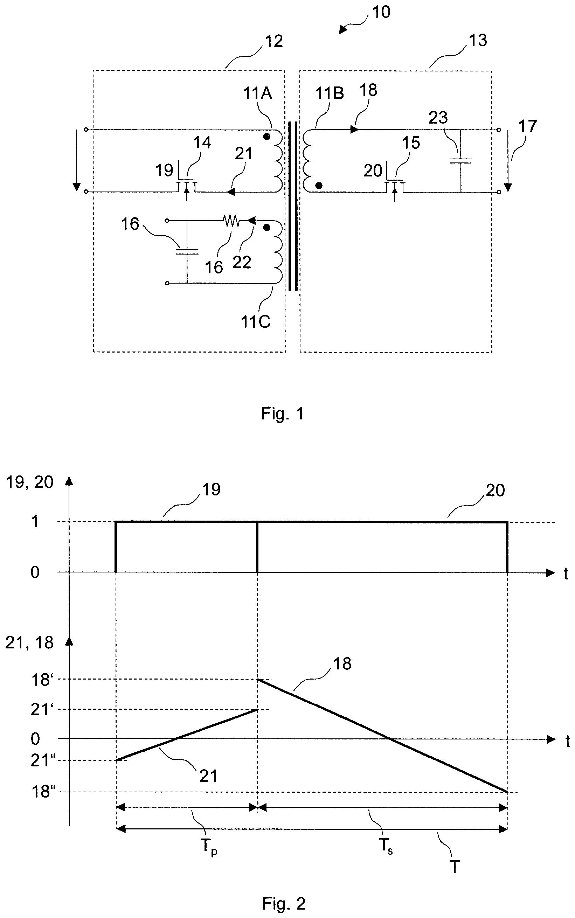

Fig. 1 zeigt schematisch einen Synchronkonverter 10 zum Betreiben zumindest einer LED nach einem Ausführungsbeispiel, während Fig. 2 schematisch einen zeitlichen Verlauf ausgewählter elektrischer Größen 18 - 21 des Synchronkonverters 10 nach dem Ausführungsbeispiel darstellt.

Der in Fig. 1 dargestellte Synchronkonverter 10 ist als ein synchroner Sperrwandler ausgebildet, alternativ kann er jedoch auch als ein synchroner Abwärtswandler ausgebildet sein.

Der Synchronkonverter 10 umfasst mittels eines Übertragers 11A, 11B gekoppelte Versorgungs- und Lastseiten 12, 13 mit jeweiligen Schaltmitteln 14, 15; Erfassungsmittel 11C, 16 zum Erfassen einer LED-Spannung 17, und eine Steuereinrichtung (nicht dargestellt) zum Ansteuern der Schaltmittel 14, 15 in einem Gegentakt, welcher von der erfassten LED-Spannung 17 abhängt. Dabei ist die Steuereinrichtung dazu eingerichtet, das Schaltmittel 14 auf der Versorgungsseite 12 mit einer jeweiligen konstanten Einschaltzeit $T_p$ für einen jeweiligen aus einer Mehrzahl von vorgegebenen Wertebereichen für die erfasste LED-Spannung 17 anzusteuern, in den die erfasste LED-Spannung 17 fällt.

Versorgungsseitig erfolgt also eine schnelle Regelung der Einschaltzeit $T_p$ eines pulsweitenmodulierten Ansteuersignals 19 des Schaltmittels 14 auf eine Anzahl konstanter Einschaltzeitdauern, welche jeweils einem aus den mehreren vorgegebenen Wertebereichen für die erfasste LED-Spannung 17 zuzuordnen sind.

Die Steuereinrichtung kann dazu eingerichtet sein, die jeweilige konstante Einschaltzeit $T_p$ für den jeweiligen aus der Mehrzahl von vorgegebenen Wertebereichen für die erfasste LED-Spannung 17 aus einer vorgegebenen Abruftabelle abzurufen. Alternativ dazu kann die Steuereinrichtung jedoch auch dazu eingerichtet sein, die jeweilige konstante Einschaltzeit $T_p$ für den jeweiligen aus der Mehrzahl von vorgegebenen Wertebereichen für die erfasste LED-Spannung 17 im Wirkbetrieb zu berechnen.

Die Betriebsfrequenz 1/T bzw. die Periodendauer $T = T_p + T_s$, welche im Rahmen einer langsamen Regelung der Einschaltzeit $T_s$ unter der Berücksichtigung der schnellen Regelung auf die jeweils zutreffende Einschaltzeit $T_p$ einzuhalten ist, ist vorgegeben.

Eine Betriebsfrequenz der beiden Schaltmittel 14, 15 verändert sich normalerweise mit einem Strombedarf der zu betreibenden LED-Module, insbesondere also auch in einem Dimmbetrieb der zu betreibenden LED-Module. Eine gewünschte Dimmstufe lässt sich durch eine jeweilige konstante Einschaltzeit $T_p$ des Schaltmittels 14 auf der Versorgungsseite des Synchronkonverters 10 mit beeinflussen, welche wiederum eine maximale Stromstärke 18' durch das lastseitige Schaltmittel 15 sowie damit auch eine mittlere LED-Stromstärke beeinflusst, welche sich durch Glättung der Stromstärke 18 mittels einer Filterkapazität 23 ergibt.

Die Einschaltzeit $T_p$ lässt sich in Abhängigkeit von einem für eine gewünschte Dimmstufe erforderlichen mittleren LED-Strom $<I_{LED}>$ herleiten.

Der mittlere LED-Strom $<I_{LED}>$ ist dabei über die LED-Kennlinie mit der erfassten LED-Spannung 17 verknüpft.

Die Erfassungsmittel 11C, 16 umfassen eine Hilfswicklung 11C des Übertragers 11A, 11B des Synchronkonverters 10 zum Bereitstellen einer Stromstärke 22, welche zu einer Stromstärke 21 durch das Schaltmittel 14 auf der Versorgungsseite 12 des Synchronkonverters 10 proportional ist. Die Erfassungsmittel 11C, 16 umfassen ferner ein RC-Glied 16 zum Filtern der bereitgestellten proportionalen Stromstärke 22. Am Ausgang dieses Tiefpassfilters 16 wird eine zu der LED-Spannung 17 proportionale Spannung bereitgestellt.

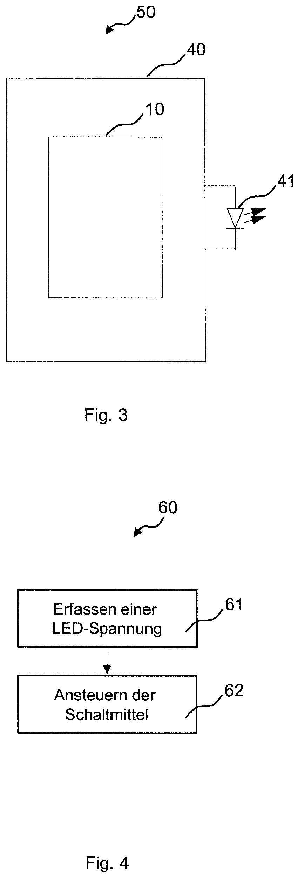

Der Wertebereich der erfassten LED-Spannung 17 kann in eine Mehrzahl von vorgegebenen Wertebereichen eingeteilt werden, in welchen es jeweils möglich ist, eine konstante Einschaltzeit $T_p$ für den jeweiligen vorgegebenen Wertebereich der LED-Spannung durch passende variable Einschaltzeitdauern $T_s$ so zu ergänzen, dass die Bedingung $T = T_p + T_s$ stets zu einer Betriebsfrequenz führt, welche auf einen im Zusammenhang mit Fig. 3 näher erläuterten schmalen Frequenzbereich einer frequenzabhängigen Impulsantwort Z des Synchronkonverters 10 begrenzt ist.

Eine Energiezufuhr in den Übertrager 11A, 11B erfolgt mittels des pulsweitenmodulierten Ansteuersignals 19 des Schaltmittels 14 während der bestimmten konstanten Einschaltzeitdauer $T_p$, welche jenem aus der Mehrzahl von vorgegebenen Wertebereichen für die erfasste LED-Spannung 17 zuzuordnen ist, in den die erfasste LED-Spannung 17 fällt. Dadurch steigt die Stromstärke 21 durch das Schaltmittel 14 von einem Minimalwert 21" auf einen Maximalwert 21' praktisch linear an. Eine Steigung $m_p$ der Stromstärke 21 ist abhängig von einer Versorgungs-/Busspannung $U_B$ des Synchronkonverters sowie von einer Induktivität 11A (bzw. $L_p$) auf der Versorgungsseite 12:

$$I_{p, max} = I_{p, min} + m_p \cdot T_p$$
$$= I_{p, min} + U_B/L_p \cdot T_p$$

mit $U_B$: Versorgungs-/Busspannung
$L_p$: Induktivität 11A

Ein Energieabruf aus dem Übertrager 11A, 11B erfolgt mittels eines pulsweitenmodulierten Ansteuersignals 20 des Schaltmittels 15 auf der Lastseite 13. Die Steuereinrichtung kann dazu eingerichtet sein, das Schaltmittel 15 mit einer variablen Einschaltzeitdauer $T_s$ in Abhängigkeit von der erfassten LED-Spannung 17 anzusteuern. Dadurch sinkt die Stromstärke 18 durch das Schaltmittel 15 von einem Maximalwert 18' auf einen Minimalwert 18" praktisch linear ab. Die Maximal- und Minimalstromstärken 18', 18" auf der Lastseite 13 sind dabei mit den Maximal- und Minimalstromstärken 21', 21" auf der Versorgungsseite 12 über ein vorgegebenes Windungsverhältnis $N_p/N_s$ des Übertragers 11A, 11B fest verknüpft. Ein Gefälle der Stromstärke 18 ist also einstellbar, und zwar in Abhängigkeit von einer LED-Spannung 17 (bzw. $U_{LED}$) sowie von einer Induktivität 11B (bzw. $L_s$) auf der Lastseite 13.

$$I_{s, min} = I_{s, max} - m_s \cdot T_s$$
$$= I_{s, max} - U_{LED}/L_s \cdot T_s$$

mit $U_{LED}$: LED-Spannung 17
$L_s$: Induktivität 11B

Die Steuereinrichtung kann demgemäß dazu eingerichtet sein, die jeweilige konstante Einschaltzeit $T_p$ für den jeweiligen aus der Mehrzahl von vorgegebenen Wertebereichen für die erfasste LED-Spannung 17 in Abhängigkeit von einer maximalen Stromstärke 18' auf der Lastseite 13 zu begrenzen. Dies ermöglicht es, die zumindest eine LED 41 auf einer gewünschten Dimmstufe zu betreiben.

Fig. 3 zeigt schematisch ein Betriebsgerät 40 zum Betreiben zumindest einer LED 41 mit dem Synchronkonverter 10 nach dem Ausführungsbeispiel und eine Beleuchtungseinrichtung 50 mit dem Betriebsgerät 40.

Das Betriebsgerät 40 zum Betreiben zumindest einer LED 41 umfasst einen Synchronkonverter 10 und ggf. weitere Funktionselemente wie beispielsweise Gleichrichter, eine Hilfswicklung für eine Niedervolt-Stromversorgung usw.

Die Beleuchtungseinrichtung 50 umfasst ein solches Betriebsgerät 40 und zumindest eine LED 41, und eignet sich insbesondere für "point-of-load"-Energieversorgungsar-chitekturen.

Fig. 4 zeigt schematisch ein Verfahren 60 zum Betreiben zumindest einer LED 41 nach einem Ausführungsbeispiel.

Das Verfahren 60 beruht auf einem Synchronkonverter 10, welcher eine Versorgungsseite 12 und eine Lastseite 13 mit jeweiligen Schaltmitteln 14, 15 aufweist, und es umfasst: ein Erfassen 61 einer LED-Spannung 17; und ein Ansteuern 62 der Schaltmittel 14, 15 in einem Gegentakt, welcher von der erfassten LED-Spannung 17 abhängt. Dabei wird das Schaltmittel 14 auf der Versorgungsseite 12 mit einer jeweiligen konstanten Einschaltzeit $T_p$ für einen jeweiligen aus einer Mehrzahl von vorgegebenen Wertebereichen für die erfasste LED-Spannung 17 angesteuert, in den die erfasste LED-Spannung 17 fällt.

Das Verfahren 60 kann ferner mit einem Synchronkonverter 10 gemäß Ausführungsbeispielen durchgeführt werden.

**Patentansprüche**

1. Synchronkonverter (10) zum Betreiben zumindest einer LED (41), umfassend

eine Versorgungsseite (12) und eine Lastseite

(13) mit jeweiligen Schaltmitteln (14, 15), Erfassungsmittel (11C, 16) zum Erfassen einer LED-Spannung (17),

eine Steuereinrichtung zum Ansteuern der Schaltmittel (14, 15) in einem Gegentakt, welcher von der erfassten LED-Spannung (17) abhängt,

**dadurch gekennzeichnet, dass**

die Steuereinrichtung dazu eingerichtet ist, das Schaltmittel (14) auf der Versorgungsseite (12) mit einer jeweiligen konstanten Einschaltzeit ($T_p$) für einen jeweiligen aus einer Mehrzahl von vorgegebenen Wertebereichen für die erfasste LED-Spannung (17) anzusteuern, in den die erfasste LED-Spannung (17) fällt.

2. Synchronkonverter (10) gemäß Anspruch 1, wobei die Steuereinrichtung dazu eingerichtet ist, die jeweilige konstante Einschaltzeit ($T_p$) für den jeweiligen aus der Mehrzahl von vorgegebenen Wertebereichen für die erfasste LED-Spannung (17) aus einer vorgegebenen Abruftabelle abzurufen.

3. Synchronkonverter (10) gemäß Anspruch 1, wobei die Steuereinrichtung dazu eingerichtet ist, die jeweilige konstante Einschaltzeit ($T_p$) für den jeweiligen aus der Mehrzahl von vorgegebenen Wertebereichen für die erfasste LED-Spannung (17) im Wirkbetrieb zu berechnen.

4. Synchronkonverter (10) gemäß einem jeden der Ansprüche 1 - 3, wobei die Steuereinrichtung dazu eingerichtet ist, die jeweilige konstante Einschaltzeit ($T_p$) für den jeweiligen aus der Mehrzahl von vorgegebenen Wertebereichen für die erfasste LED-Spannung (17) in Abhängigkeit von einer maximalen Stromstärke (18') auf der Lastseite (13) zu begrenzen.

5. Synchronkonverter (10) gemäß einem jeden der vorhergehenden Ansprüche, wobei die Steuereinrichtung dazu eingerichtet ist, das Schaltmittel (15) auf der Lastseite (13) mit einer variablen Einschaltzeit ($T_s$) in Abhängigkeit von der erfassten LED-Spannung (17) anzusteuern.

6. Synchronkonverter (10) gemäß einem jeden der vorhergehenden Ansprüche, wobei die Erfassungsmittel (11C, 16) eine Hilfswicklung (11C) einer Induktivität (11A-11C) des Synchronkonverters (10) zum Bereitstellen einer Stromstärke (22) umfassen, welche zu einer Stromstärke (21) durch das Schaltmittel (14) auf der Versorgungsseite (12) des Synchronkonverters (10) proportional ist.

7. Synchronkonverter (10) gemäß Anspruch 6, wobei die Erfassungsmittel (11C, 16) ferner ein Tiefpassfilter (16) zum Filtern der bereitgestellten proportionalen Stromstärke (22) umfassen.

8. Synchronkonverter (10) gemäß Anspruch 7, wobei die Erfassungsmittel (11C, 16) ein RC-Glied als das Tiefpassfilter (16) umfassen.

9. Synchronkonverter (10) gemäß einem jeden der Ansprüche 1 - 8, wobei der Synchronkonverter (10) als ein synchroner Sperrwandler ausgebildet ist.

10. Synchronkonverter (10) gemäß einem jeden der Ansprüche 1 - 8, wobei der Synchronkonverter (10) als ein synchroner Abwärtswandler ausgebildet ist.

11. Betriebsgerät (40) zum Betreiben zumindest einer LED (41), umfassend einen Synchronkonverter (10) gemäß einem jeden der Ansprüche 1 - 10.

12. Beleuchtungseinrichtung (50), umfassend

ein Betriebsgerät (40) gemäß Anspruch 11; und zumindest eine LED (41).

13. Verfahren (60) zum Betreiben zumindest einer LED (41) mit einem Synchronkonverter (10), welcher eine Versorgungsseite (12) und eine Lastseite (13) mit jeweiligen Schaltmitteln (14, 15) aufweist, umfassend:

Erfassen (61) einer LED-Spannung (17), Ansteuern (62) der Schaltmittel (14, 15) in einem Gegentakt, welcher von der erfassten LED-Spannung (17) abhängt,

**dadurch gekennzeichnet, dass**

das Schaltmittel (14) auf der Versorgungsseite (12) mit einer jeweiligen konstanten Einschaltzeit ($T_p$) für einen jeweiligen aus einer Mehrzahl von vorgegebenen Wertebereichen für die erfasste LED-Spannung (17) angesteuert wird, in den die erfasste LED-Spannung (17) fällt.

14. Verfahren (60) gemäß Anspruch 13, wobei das Verfahren (60) mit einem Synchronkonverter (10) gemäß einem der Ansprüche 1 - 10 durchgeführt wird.

**Claims**

1. Synchronous converter (10) for operating at least one LED (41), comprising

a supply side (12) and a load side (13) with respective switching means (14, 15), detection means (11C, 16) for detecting an LED voltage (17), a control device for controlling the switching means (14, 15) in a push-pull mode, which depends on the detected LED voltage (17), **characterized in that** the control device is configured to control the switching means (14) on the supply side (12) with a respective constant switch-on time ($T_p$) for a respective one of a plurality of prespecified value ranges for the detected LED voltage (17) in which the detected LED voltage (17) falls.

2. Synchronous converter (10) according to Claim 1, wherein the control device is configured to retrieve from a predetermined retrieval table the respective constant switch-on time ($T_p$) for the respective one of the plurality of prespecified value ranges for the detected LED voltage (17).

3. Synchronous converter (10) according to Claim 1, wherein the control device is configured to calculate in active operation the respective constant switch-on time ($T_p$) for the respective one of the plurality of prespecified value ranges for the detected LED voltage (17).

4. Synchronous converter (10) according to any one of Claims 1 - 3, wherein the control device is configured to limit the respective constant switch-on time ($T_p$) for the respective one of the plurality of prespecified value ranges for the detected LED voltage (17), as a function of a maximum current (18') on the load side (13).

5. Synchronous converter (10) according to any one of the preceding claims, wherein the control device is configured to control the switching means (15) on the load side (13) with a variable switch-on time ($T_s$), as a function of the detected LED voltage (17).

6. Synchronous converter (10) according to any one of the preceding claims, wherein the detection means (11C, 16) comprise an auxiliary winding (11C) of an inductor (11A-11C) of the synchronous converter (10) for providing a current (22) which is proportional to a current (21) through the switching means (14) on the supply side (12) of the synchronous converter (10).

7. Synchronous converter (10) according to Claim 6, wherein the detection means (11C, 16) further comprise a low-pass filter (16) for filtering the proportional current (22) provided.

8. Synchronous converter (10) according to Claim 7, wherein the detection means (11C, 16) comprise an RC element as the low-pass filter (16).

9. Synchronous converter (10) according to any one of Claims 1 - 8, wherein the synchronous converter (10) is designed as a synchronous flyback converter.

10. Synchronous converter (10) according to any one of Claims 1 - 8, wherein the synchronous converter (10) is designed as a synchronous buck converter.

11. Operating device (40) for operating at least one LED (41), comprising a synchronous converter (10), according to any one of Claims 1 - 10.

12. Lighting device (50), comprising

   an operating device (40) according to Claim 11; and
   at least one LED (41).

13. Method (60) for operating at least one LED (41) with a synchronous converter (10), which has a supply side (12) and a load side (13) with respective switching means (14, 15), comprising:

   detection (61) of an LED voltage (17),
   controlling (62) the switching means (14, 15) in a push-pull mode, which depends on the detected LED voltage (17),
   **characterized in that**
   the switching means (14) on the supply side (12) is controlled with a respective constant switch-on time ($T_p$) for a respective one of a plurality of prespecified value ranges for the detected LED voltage (17) in which the detected LED voltage (17) falls.

14. Method (60) according to Claim 13, wherein the method (60) is carried out with a synchronous converter (10) according to any one of Claims 1 - 10.

**Revendications**

1. Convertisseur synchrone (10) pour faire fonctionner au moins une LED (41), comprenant

   un côté d'alimentation (12) et un côté de charge (13) comprenant respectivement des moyens de commutation (14, 15),
   des moyens de détection (11C, 16) pour la détection d'une tension de LED (17),
   un dispositif de commande pour la commande des moyens de commutation (14, 15) en push-pull, lequel dépend de la tension de LED (17) détectée,
   **caractérisé en ce que**

le dispositif de commande est configuré pour commander le moyen de commutation (14) du côté d'alimentation (12) avec une durée de fonctionnement constante ($T_p$) respective pour l'une respective d'une pluralité de plages de valeurs prédéfinies pour la tension de LED (17) détectée, dans laquelle se situe la tension de LED (17) détectée.

2. Convertisseur synchrone (10) selon la revendication 1, dans lequel
le dispositif de commande est configuré pour récupérer la durée de fonctionnement constante ($T_p$) respective pour la plage de valeurs respective de la pluralité de plages de valeurs prédéfinies pour la tension de LED (17) détectée à partir d'un tableau de récupération.

3. Convertisseur synchrone (10) selon la revendication 1, dans lequel
le dispositif de commande est configuré pour calculer la durée de fonctionnement constante ($T_p$) respective pour la plage de valeurs respective de la pluralité de plages de valeurs prédéfinies pour la tension de LED (17) détectée durant le fonctionnement opérationnel.

4. Convertisseur synchrone (10) selon l'une quelconque des revendications 1 à 3, dans lequel
le dispositif de commande est configuré pour limiter la durée de fonctionnement constante ($T_p$) respective pour la plage de valeurs respective de la pluralité de plages de valeurs prédéfinies pour la tension de LED (17) détectée en fonction d'une intensité de courant maximale (18') sur le côté de charge (13).

5. Convertisseur synchrone (10) selon l'une quelconque des revendications précédentes, dans lequel
le dispositif de commande est configuré pour commander le moyen de commutation (15) sur le côté de charge (13) avec une durée de fonctionnement variable ($T_s$) en fonction de la tension de LED (17) détectée.

6. Convertisseur synchrone (10) selon l'une quelconque des revendications précédentes, dans lequel
les moyens de détection (11C, 6) comprennent un enroulement auxiliaire (11C) d'une inductance (11A-11C) du convertisseur synchrone (10) pour la fourniture d'une intensité de courant (22), laquelle est proportionnelle à une intensité de courant (21) à travers le moyen de commutation (14) sur le côté d'alimentation (12) du convertisseur synchrone (10).

7. Convertisseur synchrone (10) selon la revendication 6, dans lequel
les moyens de détection (11C, 16) comprennent en outre un filtre passe-bas (16) pour le filtrage de l'intensité de courant (22) proportionnelle fournie.

8. Convertisseur synchrone (10) selon la revendication 7, dans lequel
les moyens de détection (11C, 16) comprennent un circuit RC comme filtre passe-bas (16).

9. Convertisseur synchrone (10) selon l'une quelconque des revendications 1 à 8, dans lequel
le convertisseur synchrone (10) est conçu comme un convertisseur à récupération synchrone.

10. Convertisseur synchrone (10) selon l'une quelconque des revendications 1 à 8, dans lequel
le convertisseur synchrone (10) est conçu comme un convertisseur abaisseur synchrone.

11. Appareil de fonctionnement (40) pour faire fonctionner au moins une LED (41), comprenant
un convertisseur synchrone (10) selon l'une quelconque des revendications 1 à 10.

12. Dispositif d'éclairage (50), comprenant

un appareil de fonctionnement (40) selon la revendication 11 ; et
au moins une LED (41).

13. Procédé (60) pour faire fonctionner au moins une LED (41) au moyen d'un convertisseur synchrone (10), lequel présente un côté d'alimentation (12) et un côté de décharge (13) présentant respectivement des moyens de commutation (14, 15), comprenant :

la détection (61) d'une tension de LED (17),
la commande (62) des moyens de commutation (14, 15) en push-pull, lequel dépend de la tension de LED (17) détectée,
**caractérisé en ce que**
le moyen de commutation (14) du côté d'alimentation (12) est commandé avec une durée de fonctionnement constante ($T_p$) respective pour une plage de valeurs respective d'une pluralité de plages de valeurs prédéfinies, dans laquelle se situe la tension de LED (17) détectée.

14. Procédé (60) selon la revendication 13, dans lequel
le procédé (60) est exécuté avec un convertisseur synchrone (10) selon l'une quelconque des revendications 1 à 10.

Fig. 1

Fig. 2

Fig. 3

Erfassen einer
LED-Spannung /61

Ansteuern der
Schaltmittel /62

Fig. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2015200599 A1